# EUROPEAN PATENT APPLICATION

(11) **EP 3 255 393 A1**
(43) Date of publication of application: **13.12.2017**
(21) Application number: 17460030.4
(22) Date of filing: 25.05.2017
(51) Int. Cl.: G01G 7/02, G01G 23/01, G01G 21/22

(54) **AUTOMATIC MASS COMPARATOR**

(30) Priority: 25.05.2016 PL 41732116
(71) Applicant: Radwag Wagi Elektroniczne Witold Lewandowski, 26-600 Radom (PL)
(72) Inventor: SOLECKI, Michal, 26-600 Radom (PL)
(74) Representative: Lampart, Jerzy

(57) **Abstract**

An automatic mass comparator is equipped with a base, in the centre of which a wheel conveyor is placed on a rotary-lifting mechanism, which wheel conveyor is intended to transfer weights onto a balance, also placed on the base, columns surrounding the wheel conveyor which columns support a top base, a rotary-lifting mechanism equipped with the balance featuring a weighing pan, which weighing pan is situated in the axis of a vertical load introduction post of a weighing mechanism. The coil is winded using coil wire made of material of specific gravity significantly lower than copper weight, preferably aluminium wire, whereas the lever is made as monolithic where there are no joints. The comparator guarantees the average standard deviation not greater than 2 divisions for the balance division equal 0.1 microgram.

## Description

This invention relates to an automatic mass comparator, used for comparison of series of test weights with reference standard weights.

When it comes to State of the Art, commonly known inventions are such solutions of comparators that load a comparator's weighing pan with reference standard weights and test weights by means of a wheel-shaped conveyor, which conveyor rotates in a horizontal plane in order to transfer a relevant weight so as to place it over the weighing pan, and moves up and down in order to put the transferred weigh onto the weighing pan. One of such solutions is utility model DE29517368 of 1995 disclosing the above described mass comparator.

Patent US2002096371 discloses another case, similar in terms of operation, i.e. a mass comparator equipped with a wheel-shaped conveyor. This very invention was designed to support weights of various shapes and sizes.

Another known invention has been disclosed by patent P.413726, the invention is an automatic mass comparator intended for comparison of test weights with reference standard weights, using motor-rotated wheel-shaped conveyor equipped with numerous weight supports, for both test and reference standard weights, of shape allowing support of various weights, which invention transfers the weights onto the weighing pan by means of a mechanism of gravitational lowering, and positions the wheel-shaped conveyor on an inserting pin in the course of the wheel-shaped conveyor lowering. Both test and reference standard weights are preliminary placed on the wheel-shaped comparator's conveyor, which conveyor is fixed and rotated horizontally, and moved up and down by means of a rotary-lifting mechanism.
For balances with the smallest measurement divisions, smaller than 1 microgram, for precise weighing of small loads, of order of magnitude of tens of grams at most, non-monolithic weighing mechanism are used, components of which mechanisms, contrary to monolithic mechanism, cut out of one piece of material, are joined using screw fastenings. Monolithic mechanisms provide worse results when it comes to precise weighing, required by chemical or pharmaceutical laboratories. State of the Art solutions for this invention use conventional balances with copper wire coil, non-monolitic weighing mechanism in which mechanisms screw fastenings are used to join its components with lever consisting two parts, and a weighing pan that is fixed on the extension arm in relation to the vertical load introduction post.

While checking test weights, the ABBA method is most commonly used, where A means loading a weighing pan with a reference standard weight, whereas B means loading the weighing pan with a test weight. ABBA method consists in loading the weighing pan with reference standard weight A first, which is then weighed and removed from the weighing pan in order to make room for test weigh B, which weight B upon being loaded is weighed and removed in order to be loaded and weighed again. When reweighed, the test weight B is removed from the weighing pan in order to make room for the reference standard weight A which is placed onto the weighing pan again in order to be weighed for the second time. With this, one measurement of reference and test weights is completed wherein the results of the measurement are the average value of weight A weighings and the average value of weight B weighings. The complete comparison of a reference standard weight with a test weight is possible due to repeatedly carried out weighings, i.e. weighing series, wherein ABBA method is applied and statistics calculations, which is not the object of this invention. Automatic mass comparators are used not only in order to replace the operator, which is to eliminate human errors and, at the same time, lower labour costs but also to improve repeatability of measurements which is defined as precision of repeated measurements of the same measurement variable, weight in this case. Weighing must be carried out using the same weighing instrument, under the same ambient conditions, and take place in short time intervals. Robots have an advantage over the human due to the fact that it always places the weights onto the weighing pan in the same manner. Measurement repeatability is influenced also by a mechanical design of the weighing instrument in case of either a robot or a human operator.

One of the most significant problems with this kind of weighing instruments is to obtain high measurement repeatability while measuring light weights, mass of which is not greater than 2 grams.

Generally when it comes to scales with electromagnetic compensation, it is pursued to minimize deformation caused by weighing pan loading. Every, even minimal, lever displacement from the equilibrium should be immediately compensated by force generated in a coil, through which compensation current, proportional to the generated force, flows. Minimizing system displacement from the equilibrium results in less significant deformations of flexible components that are parts of each mechanism of balances with electromagnetic compensation. It is not possible to eliminate occurrence of deformations, which deformations are not repetitive, completely. The mechanical theory states that flexible components subjected to tensile forces act differently at the moment when the force is exerted onto them (tension) and when it is released (recovery). The hysteresis phenomenon is known as non-overlapping of load curve with flexible component recovery curve. This means that current equilibrium may differ from previous one by value being a result of the hysteresis phenomenon.

The object of this invention is mechanical design of automatic mass comparator which design improves measurement repeatability calculated as the average standard deviation while weighing reference standard weights and test weights, especially those of mass equal or lower than 2 grams, wherein the improved repeatability is no more than 2 measurement divisions for balance division equal 0.1 microgram.

The automatic mass comparator is equipped with a base in the centre of which a conveyor wheel is placed on a rotary-lifting mechanism, which mechanism is placed on a top base. The automatic mass comparator is additionally equipped with columns surrounding the conveyor wheel of the rotary-lifting mechanism, which columns support the top base. The mechanism comprises three parts joined by the wheel conveyor axle, a bottom part placed between the bottom base and the wheel conveyor, a top part placed above the wheel conveyor, and the third part of the rotary-lifting mechanism, which third part is an actuator placed on the top base. The mass comparator is equipped with a balance featuring a weighing mechanism comprising two parallel guide members linked by a vertical load introduction post, a weighing pan, a lever with an arm that is connected to the vertical load introduction post via a flexible connecting member, which lever is connected articulately to a stationary base of the balance, to which a balance body an electromagnetic actuator, preferably cup-shaped, is fixed as well, and which actuator forms a magnetic circuit with an air gap and a permanent magnet. In the air gap, a ring-shaped coil surrounding the permanent magnet is placed, the coil is fixed to the other arm of the lever. The weighing pan is situated in the axis of the vertical load introduction post. Whereas the coil is winded using winding wire made of material of specific gravity lower than copper specific gravity, preferably aluminium wire. The lever is made as monolithic. Due to this, features such as: weighing pan position in relation of the vertical load introduction post, coil mass and the lever mechanical design give average standard deviation not greater than two divisions for the balance division equal 0.1 microgram. The wheel conveyor of the automatic mass comparator features evenly spaced recesses or openings, in which weight supports are fixed. The wheel conveyor is designed the way that each central point of each weight support fastening is accompanied by a positioning opening which is used to clearly determined the position of the wheel conveyor in relation to the weighing pan, by means of the positioning pin. The rotary-lifting mechanism is designed in such a way that the wheel conveyor is suspended on this mechanism. When the mechanism stops generating a force holding the wheel conveyor position then the wheel conveyor lowers, due to deadweight of the wheel conveyor, in a way controlled by the top part of the rotary-lifting mechanism. The rotary-lifting mechanism additionally holds the wheel conveyor axle in a vertical position. The long lever arm is joined with the coil, the short lever arm is joined with the vertical load introduction post by means of the flexible connecting member. The balance used for mass comparison is a weighing module equipped with a communication interface connected to a computer.

Mechanical design of the automatic mass comparator enables placing weights on the weighing pan and their measurement with high repeatability through gravitational lowering and relevant positioning of the wheel conveyor. The hysteresis of measurement is minimised by decreasing deformation amplitude, use of proper materials for flexible components, proper forming method of flexible components, however its influence on the measurement cannot be entirely eliminated. Still further minimization of the impact the hysteresis error exerts is possible. Improved weighing parameters, especially repeatability of measurements, so crucial parameter when it comes to mass comparators, have been obtained due to elimination of compromise solutions applied in balances. Due to these implemented features greater measurements repeatability is observed. More compact design of the whole mechanism resulted in use of shorter lever and vertical load introduction post. These both components are mechanically related to the weighing pan and the measured load, which means that they are directly engaged in the weighing operation. Use of coil wire made of material of specific gravity lower than specific gravity of commonly used copper wire gave reduced coil weight as a consequence. Aluminium, for example, is characteristic for the fact that its specific gravity is three times lower than copper specific gravity. Implementing the above described measures brought about lower weight and at the same time lower inertia of movable weighing mechanism components that are related to the weighing pan and measured load, i.e. components that are engaged in weighing operation. When it comes to a system of lower inertia, deflection from the equilibrium is balanced faster and easier compensated in case of lower compensation current and lower current fluctuations, and at the same time in case of less significant deformations of flexible components and, as a result, lower hysteresis errors. More stable operation of the weighing system is assured by situating the weighing pan in the axis of the vertical load introduction post, which post links two parallel guide members. Additionally the lever made as monolithic member, lacking any screw and/or glue connections features all advantages related to material homogeneity of the whole component, i.e. greater repeatability of performance over time, reduced moisture absorption and no risk of releasing hidden tensions from screw joints.

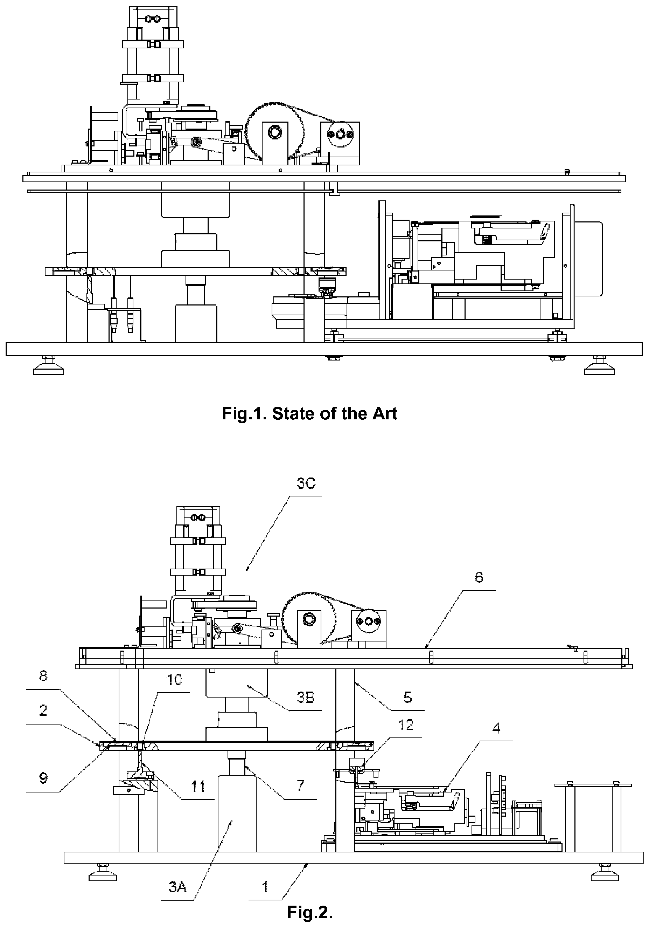

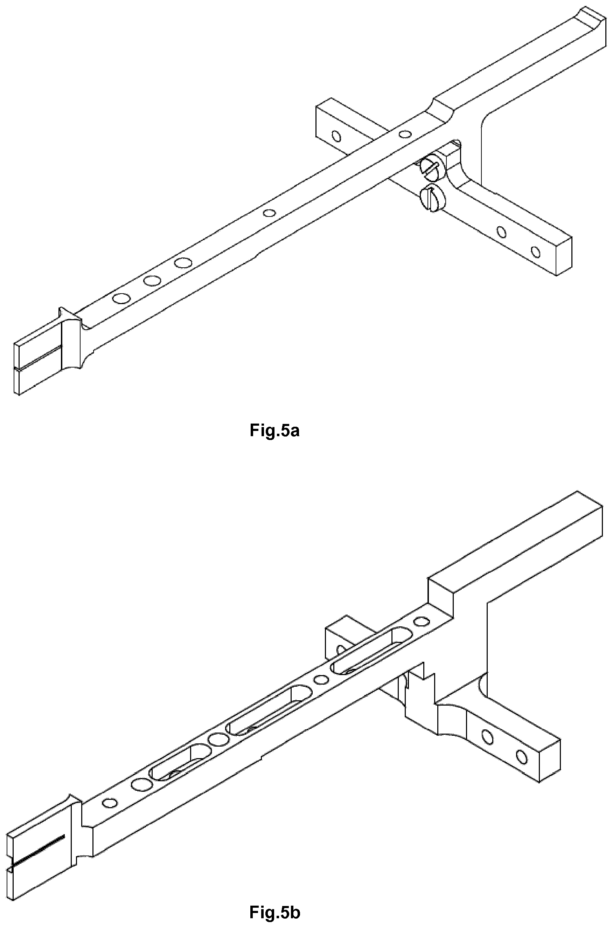

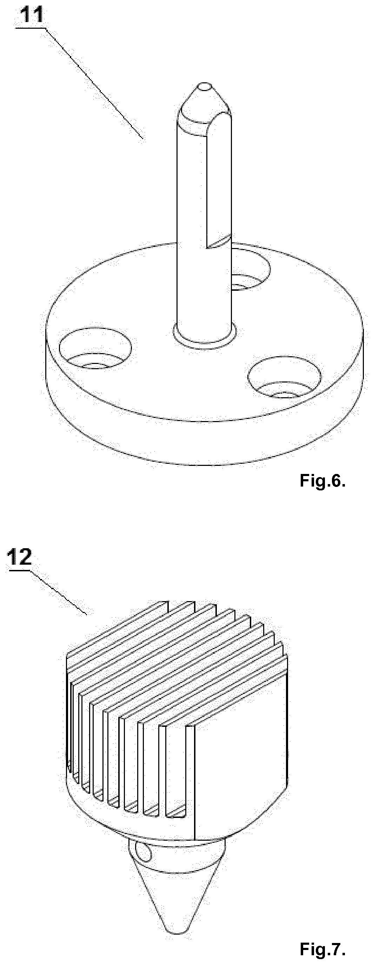

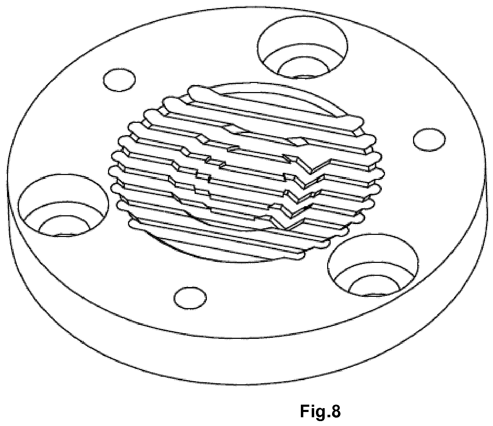

The automatic mass comparator being a State of the Art solution for the disclosed invention, is presented in the drawing in Fig.1, Fig. 2 shows a side view of the automatic mass comparator being the object of the invention, Fig.3 is an axonometric projection of the comparator being the object of the invention, Fig. 4 shows a weighing mechanism diagram illustrating connections between mechanical components of this mechanism, Fig. 5a presents an exemplary lever combined of two elements joined by screw and/or glue, Fig. 5b presents an exemplary monolithic lever that is to be used in the invention, Fig. 6 presents a positioning pin, Fig. 7 presents a ribbed weighing pan, and Fig.8 presents a weight support.

The automatic mass comparator being the object of the invention is equipped with a base 1, in the centre of which a wheel conveyor 2 is situated on a rotary-lifting mechanism 3 (3A, 3B, 3C), which wheel conveyor is intended to transfer weights onto a balance 4, also placed on the base 1. The wheel conveyor is surrounded by columns 5, which support a top base 6. The rotary-lifting mechanism 3 comprises three parts joined by a wheel conveyor axle 7, a bottom part 3A placed between the bottom base 1 and the wheel conveyor 2, a top part 3B placed above the wheel conveyor 2, and the third part of the rotary-lifting mechanism 3C, which third part is an actuator placed on the top base 6. The whole rotary-lifting mechanism 3A, 3B, 3C holds the wheel conveyor axle 7 in a vertical position in the course of lifting and lowering operation. The wheel conveyor 2 features evenly spaced recesses or openings, in which weight supports 8 are fixed, further down referred to as weight support fastening 9. The wheel conveyor 2 is designed in such a way that each central point of each weight support fastening 9 is accompanied by a positioning opening 10 used to clearly determine, by means of a positioning pin 11, the position of the wheel conveyor 2 in relation to a weighing pan 12. Additionally, the position is precisely set when the wheel conveyor 2 is lowered, using the actuator of rotary-lifting mechanism 3C, in order to place a particular weight onto the ribbed weighing pan 12. In the course of the positioning operation, ribs of the stand intended for the weight support 8 go through ribs of the weighing pan without getting in contact with them which is possible due to precise positioning of the wheel conveyor 2 onto the positioning pin 11. As a result of the wheel conveyor lowering process, the measured weight is taken over by the weighing pan. The rotary-lifting mechanism 3A, 3B, 3C is designed in such a way that the wheel conveyor 2 is suspended on this mechanism. When the mechanism stops generating force holding position of the wheel conveyor 2 then the wheel conveyor lowers, due to deadweight of the wheel conveyor 2, in a way controlled by the top part of the rotary-lifting mechanism 3C, simultaneously keeping its vertical position through guiding wheel conveyor axle 7 by the rotary-lifting mechanism in its bottom part 3A and its top part 3B.

The balance 4 used in the presented exemplary solution is a weighing module not equipped with a display but featuring a communication interface connected to a computer which displays and analyses data. The weighing mechanism built into the balance 4 comprises two parallel guide members 13 and 14 linked by a vertical load introduction post 15 which can move vertically, the weighing pan 12 situated in the axis of the vertical load introduction post 15, a lever 16 with an arm that is joined to the vertical load introduction post 15 via a flexible connecting member 17, which lever is connected articulately to a stationary base of the balance 18, to which base of the balance 18 a body of electromagnetic actuator 19, preferably cup-shaped, is fixed, and which electromagnetic actuator body 19 forms a magnetic circuit of a permanent magnet 20 with an air gap 21 in which a ring-shaped coil 22 surrounding the permanent magnet 20 is placed, and which coil is joined to an arm of the lever 16. The arm of the lever 16 on the coil 22 side is preferably longer than the other lever arm connected to the weighing pan 12 via the flexible connecting member 17 and the vertical load introduction post 15. Through the coil 22 compensation current generating compensation force flows, the value of the generated compensation force is conditioned by value of force exerted on the short arm of lever 16. Lever position is measured using an electro-optical apparatus which is a position sensor 23 fixed to the base 18, which position sensor 23 is electrically connected to a regulator including feedback, which regulator in response to measuring signal adjusts compensation current so that the lever 16 either is held in a stable position or returns to its initial point after load change resulting from change of measured mass. The weighing pan 12 is situated in an axis of the vertical load introduction post 15, the coil 22 is winded using a coil wire made of material of specific gravity lower than copper specific gravity, preferably aluminium wire, the lever 16 is a monolithic design, which features, as a result, give the average standard deviation not greater than 2 divisions for the balance division equal 0.1 microgram.

Mechanical design of the automatic mass comparator being an object of the invention is based on the wheel conveyor. Both test and reference standard weights are placed on the wheel conveyor, which conveyor is fixed and rotated in horizontal plane, and moved vertically by means of a drive equipped with an electric motor and gear. The comparator's base is equipped with a positioning pin, which pin in the course of lowering the wheel conveyor by means of the rotary-lifting mechanism, passes through one of the positioning openings of the wheel conveyor. Wheel conveyor position is checked using a pair of position sensors, one of which counts position markers whereas the other one determines initial position with reference to the main position marker.

The wheel conveyor suspended on the lever is lowered gravitationally in a vertical plane in such a way that its horizontal angular position can be precisely determined by means of the positioning pin. This allows use of ribbed weight supports, which are taken over by ribs of the weighing pan going through the weight stand's ribs in the course of lowering the wheel conveyor.

Around the outer edge of the wheel conveyor, weight supports intended for both test and reference standard weights are placed, wherein the weight supports are installed separately in recesses, openings or on the surface of the plate, and formed in a way that weights of different shapes can be received by them. The cooperating balance is equipped with a ribbed weighing pan. When the wheel conveyor position is set, it is lowered in order a particular weight could be placed onto the weighing pan, next the wheel conveyor is lifted in order the weight could be unloaded. Wheel conveyor rotation setting its position in relation to the weighing pan is carried out with use of motor connected with the wheel conveyor. The use of the positioning pin enables setting position of each weight in relation to the weighing pan before the weight is put down, the position is set using motor control. Weight supports feature ribbed opening through which, in the course of lowering the wheel conveyor, ribs of the weighing pan go without getting in contact through the ribs of the stand. In this manner the weighing pan takes over the weight from the support while lowering the wheel conveyor. Upon weight measurement, the wheel conveyor is lifted, the weight is taken over by the support and the comparator proceeds to the next comparison step, i.e. either the weight is lowered again or the wheel conveyor position changes.

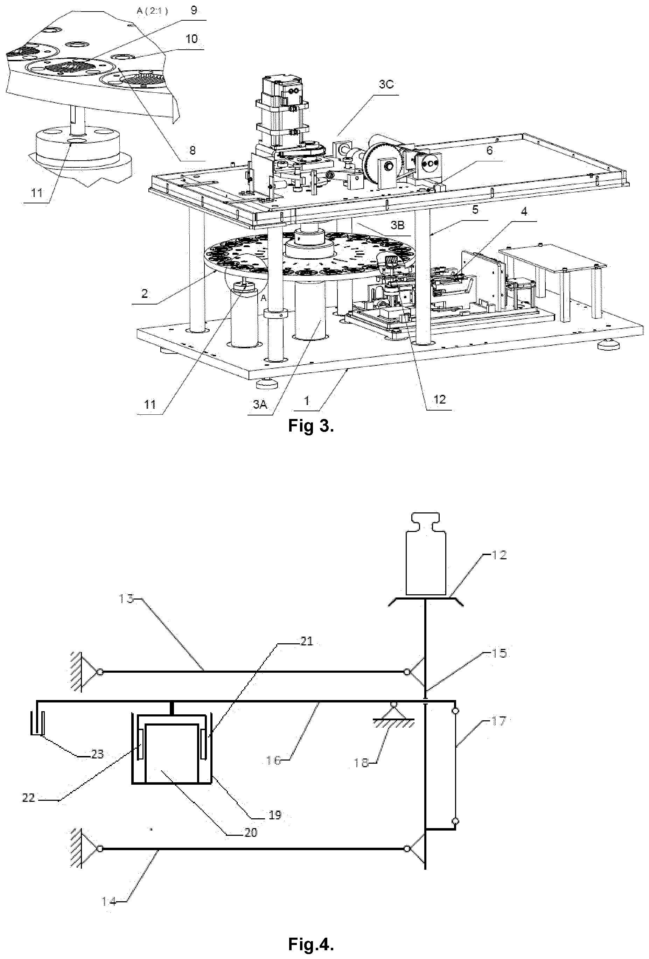

Applied in the invention an electromagnetic balance mechanism, being a system transmitting force exerted by the weight loaded on the weighing pan, comprises two parallel guide members presented in Fig. 4, linked by a vertical load introduction post able to move vertically, wherein the said movement is possible due to flexible connecting members susceptible to deformations, which members are also situated where the vertical posts are connected with the stationary base, and the weighing pan situated in the axis of the aforementioned vertical load introduction post. On balances the weighing pan is often placed on an additional extension arm which sets additional torque moment onto the movable vertical load introduction post. The force of gravity resulting from weighing pan loading is transferred, by means of a flexible connecting member susceptible to bending, from the movable vertical load introduction post onto the arm of a lever, which lever is shown in Fig. 4 under the upper guide member, and which connecting member is shown on the right of the vertical load introduction post in the same figure. The said lever is connected articulately to a stationary base of the balance, which joint is usually comprised of two regular flexible components, bend axis of which components cover each other. To the stationary base of the balance, the body of electromagnetic actuator, preferably cup-shaped, is fixed, wherein the electromagnetic actuator body forms magnetic circuit of permanent magnet. Between the electromagnetic actuator body and the magnet there is an air gap. In the magnetic field of the air gap there is a coil, which coil is joined to a long arm of the lever. Through the coil, compensation current generating compensation force flows, value of the generated compensation force is conditioned by value of force exerted on the short arm of the lever. Lever position is usually measured using an electro-optical apparatus which is a position sensor fixed to the base, shown in the Fig. 4 to the left of the lever. The position sensor is electrically connected to the regulator (the electrical part has not been presented in the Fig. 4) including feedback, which regulator in response to the measuring signal (lever inclination) adjusts the compensation current so that the lever either is held in a stable position or returns to its initial point after load change resulting from the change of measured mass.

### Components list

- 1.: Base
- 2.: Wheel conveyor
- 3.: Rotary-lifting mechanism
A- bottom part, B- top part, C- actuator
- 4.: Balance (weighing module)
- 5.: Columns
- 6.: Top base
- 7.: Wheel conveyor axle
- 8.: Weight support
- 9.: Weight support fastening
- 10.: Positioning opening
- 11.: Positioning pin
- 12.: Ribbed weighing pan
- 13.: Horizontal guide member
- 14.: Horizontal guide member
- 15.: Vertical load introduction post
- 16.: Lever
- 17.: Flexible connecting member
- 18.: Stationary base of the balance
- 19.: Electromagnetic actuator body
- 20.: Permanent magnet
- 21.: Air gap
- 22.: Coil
- 23.: Position sensor

## Claims

1. An automatic mass comparator is equipped with a base in the centre of which a wheel conveyor is placed on a rotary-lifting mechanism, which mechanism is placed on the top base, columns surrounding the wheel conveyor which columns support a top base, a rotary-lifting mechanism comprised of three parts connected by means of a wheel conveyor axle, i.e. a bottom part placed between the bottom base and the wheel conveyor, a top part placed above the wheel conveyor and the third part of the rotary-lifting mechanism which third part is an actuator placed on the top base, a balance featuring a weighing mechanism comprising two parallel guide members linked by a vertical load introduction post, a weighing pan, a lever with arm that is joined to the vertical load introduction post via a flexible connecting member, which lever is connected articulately to a stationary base of the balance, to which base of the balance a body of electromagnetic actuator, preferably cup-shaped, is also fixed, and which electromagnetic actuator body forms a magnetic circuit with an air gap and a permanent magnet, in which air gap a ring-shaped coil surrounding the permanent magnet is placed and fixed to the other arm of the lever **characterized in that** the weighing pan (12) of the balance is situated in an axis of vertical load introduction post (15), and the coil (22) is winded using a coil wire made of material of specific weight lower than copper weight, preferably aluminium wire, and the lever (16) is made as monolithic.

2. The automatic mass comparator of claim 1 **characterized in that** the outer edge of the wheel conveyor (2) features evenly spaced recesses or openings, in which weight supports are fixed.

3. The automatic mass comparator of claim 1 **characterized in that** the wheel conveyor (2) is designed in such a way that each central point of each weight support fastening is followed by a positioning opening which is used to clearly define, by means of a positioning pin, the position of the wheel conveyor in relation to the weighing pan.

4. The automatic mass comparator of claim 3 **characterized in that** the rotary-lifting mechanism holds the wheel conveyor axle (7) in a vertical position.

5. The automatic mass comparator of claim 1 **characterized in that** the long arm of the lever (16) is preferably joined with the coil, and the short arm of the lever is preferably joined with the vertical load introduction post by means of a flexible connecting member.

6. The automatic mass comparator of claim 1 **characterized in that** the balance used for the mass comparison is preferably a weighing module equipped with a communication interface connected to a computer.
